# EUROPÄISCHE PATENTSCHRIFT

(11) **EP 2 174 274 B1**
(45) Veröffentlichungstag und Bekanntmachung des Hinweises auf die Patenterteilung: **29.08.2018**
(21) Anmeldenummer: 08774772.1
(22) Anmeldetag: 04.07.2008
(51) Int. Cl.: G06Q 10/08, G06Q 50/28

(54) **VERFAHREN ZUM IDENTIFIZIEREN VON TRANSPORTGÜTERN, INSBESONDERE GEPÄCKSTÜCKEN**
METHOD FOR IDENTIFYING TRANSPORT GOODS, PARTICULARLY LUGGAGE ITEMS
PROCÉDÉ D'IDENTIFICATION DE BIENS TRANSPORTÉS, NOTAMMENT DE BAGAGES

(30) Priorität: 27.07.2007 DE 102007035272
(43) Veröffentlichungstag der Anmeldung: 14.04.2010
(73) Patentinhaber: Siemens Aktiengesellschaft, 80333 München (DE)
(72) Erfinder: GRUNDMANN, Hans-Jörg, 90513 Zirndorf (DE); KINNEMANN, Georg, 15741 Bestensee (DE)
(86) Internationale Anmeldenummer: PCT/EP2008/058674
(87) Internationale Veröffentlichungsnummer: WO 2009/015991

(56) Entgegenhaltungen:
- EP-A- 1 070 664
- WO-A-2008/003609
- US-A- 5 299 116
- US-A1- 2005 114 690

## Beschreibung

Die Erfindung betrifft ein Verfahren zum Identifizieren von sich physikalisch voneinander unterscheidenden Transportgütern, insbesondere zum Identifizieren von automatisch sortierbarem Passagiergepäck im Flug-, Bahn oder Schiffsreiseverkehr, anhand von dem Transportgut zugeordneten, elektronisch auslesbaren Informationen.

Unter Transportgut werden im Zusammenhang mit der vorliegenden Erfindung sowohl das Gut oder die Ware selbst, wie auch die das Gut aufnehmende Verpackung bzw. der das Gut aufnehmende Behälter verstanden. Derartige Transportgüter werden heute weitgehend automatisch durch Transportanlagen geleitet und dabei hinsichtlich ihrer Bestimmungsziele sortiert, wozu die einzelnen Transportgüter mit individuellen, maschinell auslesbaren Informationen versehen sind, die es ermöglichen, das jeweilige Transportgut innerhalb der Transportanlage zu identifizieren und damit die Voraussetzung zu schaffen, anhand der in einem Rechner abgelegten Daten zu ermitteln, wohin das Transportgut innerhalb der Anlage geleitet werden soll.

Typische Sortier- und Transportanlagen sind Gepäcksortieranlagen in Flughäfen. Dort werden sämtliche Gepäckstücke mit einem Informationsträger, einem s.g. Baggage Tag versehen, der in der Regel, neben dem gewöhnlich in Klarschrift aufgedruckten Ziel-Airport und der Flugnummer, auch einen Identifikationscode mit ebensolchen Angaben enthält, die auch eine Zuordnung des Gepäckstücks zum Flugpassagier ermöglichen. Dieser Identifikationscode ist derzeit gewöhnlich ein Barcode, kann aber auch ein 2D-Code oder die Information auf einem RFID Tag sein. Der Informationsträger ist geeignet und dazu vorgesehen, an nachfolgenden Lesestationen innerhalb der Flughafen-Logistik die sich gewöhnlich in Form, Größe und anderen physikalischen Merkmalen mehr oder weniger deutlich unterscheidenden Gepäckstücke zu identifizieren, um sie automatisch durch die Gepäckförderanlage in die gewünschten Richtungen, d.h. zum vorgesehenen Flugzeug oder zum richtigen Gepäckband, zu leiten.

Es besteht aber das Problem, dass nicht immer alle Informationsträger bzw. deren Identifikationscodes gelesen werden können und/oder einige eingelesene Identifikationscodes nur fehlerhaft gelesen werden. Hinzu kommt, dass Informationsträger verloren gehen, beispielsweise weil sie sich in mechanischen Teilen der Gepäckförderanlage verhaken und abgerissen werden, so dass die Gepäckstücke nicht mehr oder nur noch mit den Informationen, die der Kunde selbst angebracht hat, identifiziert werden können.

Gepäckstücke mit automatisch nicht lesbaren Informationsträgern oder Identifikationscodes werden einer manuellen Station zugeführt und dort von einer Bedienkraft, in der Regel mit einem Handscanner oder einem ähnlichen Gerät, identifiziert. Dies bedeutet aber stets einen erhöhten Aufwand an Zeit und Kosten.

Nicht aussortierte Gepäckstücke mit fehlerhaft gelesenem Identifikationscode werden häufig fehlgeleitet. Im besten Fall fällt dieses noch auf dem Abgangsflughafen auf, im schwerwiegenden Fall wird das Gepäckstück mit einem falschen Flug zum falschen Flughafen transportiert. Die Korrektur dieser Fehlleitung bedeutet einen noch höheren Aufwand und große Verärgerung bei den betroffenen Passagieren.

Aussortierte Gepäckstücke, deren Informationsträger verloren wurden, werden im Allgemeinen der Fundstelle (Lost & Found) zugeführt, wo sie von den Passagieren nachgefragt und identifiziert werden können, sobald der Verlust bemerkt wurde.
Aus der EP 1 070 664 A2 ist ein Verfahren zur automatisierten Beförderung, Sortierung und Verladung von Gepäckstücken bekannt, bei welchem Gepäckdaten an Datenträgern gespeichert werden, welche an den Gepäckstücken angebracht werden und beim Durchlaufen eines Verladeweges der Gepäckstücke automatisch von hierfür vorgesehenen optischen oder elektronischen Lesegeräten erfasst werden, um den Verladevorgang zu steuern. Die WO 2008/003609 A1 beschreibt ein Verfahren zum verbesserten Wiederauffinden und Identifizieren verloren gegangener oder nicht zuordenbarer Gepäckstücke, insbesondere von Fluggepäckstücken. Die WO 2008/003609 sieht hierzu vor, dass vor der Abreise bei der Aufgabe am Schalter von jedem Gepäckstück ein Foto oder eine Videoaufnahme angefertigt wird, welches bzw. welche zusammen mit Flugdaten des Passagiers abgespeichert wird. Zur Identifizierung eines Gepäckstückes bei einem Lost & Found-Vorgang, d.h. wenn ein Gepäckstück nicht auffindbar ist, werden anhand der Flugdaten des Passagiers das Bild bzw. die Videoaufnahme des verloren Gepäckstückes abgerufen, worüber das verlorene Gepäckstück identifiziert werden kann.
Aufgabe der vorliegenden Erfindung ist die Schaffung eines Verfahrens zum Identifizieren von sich unterscheidenden Transportgütern, insbesondere Gepäckstücken in Flughäfen, mit dem auch solche Transportgüter bzw. Gepäckstücke automatisch identifiziert werden können, die sich ohne Informationsträger in der Anlage befinden oder deren vorhandene Informationsträger nicht oder nur fehlerhaft lesbar sind.

Zur Lösung der Aufgabe wird erfindungsgemäß ein Verfahren nach Anspruch 1 vorgeschlagen.

Bei der Aufgabe des Transportgutes, beispielsweise eines Gepäckstückes, wird also nicht nur der übliche Informationsträger am Gepäckstück angebracht, sondern mit Hilfe spezieller Sensoren werden auch physikalische Merkmale des jeweiligen Transportgutes ermittelt. Diese spezifischen physikalischen Merkmale werden zusätzlich zu den vorhandenen, z.B. auf Informationsträgern, wie Barcodes, RFID Tags oder 2D-Codes dargestellten Informationen, elektronisch erfasst und in einem Rechner abgespeichert, um in einer funktionalen Redundanz in der Lage zu sein, bei unmöglicher Identifikation des Transportgutes über die am Transportgut angebrachten Informationsträger dennoch eine Zuordnung des Gepäckstückes vornehmen zu können.

### Das

Verfahren kann überall dort eingesetzt werden, wo Transportgüter sortiert und transportiert werden, wie in Warenhäusern, Flughäfen, Terminals von Kreuzfahrtschiffen oder anderen Verkehrsmitteln, die Passagiere und Gepäck transportieren.
Nach einem besonderen Merkmal der Erfindung ist vorgesehen, als spezifisch physikalisches Merkmal die Textur der Oberfläche des jeweiligen Transportgutes sensorisch zu erfassen und zu digitalisieren. Die Oberfläche des Transportgutes kann z.B. mittels bekannter Videoverfahren in hochauflösenden Bildern repräsentiert werden, um so die Oberflächentextur darzustellen. Mit Bildanalyseverfahren kann die Oberflächentextur ausgewertet und bestimmt werden. So lässt sich beispielsweise über die Oberflächenbeschaffenheit auch der Werkstoff eines Gepäckstückes erkennen.
In einer weiteren Ausgestaltung des erfindungsgemäßen Verfahrens wird die Farbe und/oder Farbverteilung auf der Oberfläche des Transportgutes erfasst und dem Merkmalsdatensatz hinzugefügt. Die Sensoren zur Erfassung der Farben und Farbverteilung können Bildsensoren, z.B. Kamerasensoren sein. Zusammen mit der Texturerfassung ließe sich bereits mit diesen wenigen Daten eine Signatur zur Identifikation eines Transportgutes, beispielsweise eines Gepäckstückes schaffen.

Wenn erfindungsgemäß als weiteres spezifisches physikalisches Merkmal die Form und/oder Formstabilität des Transportgutes erfasst wird, so kann mit diesen Merkmalen eine Identifikation des Transportgutes noch sicherer vorgenommen werden. Die geometrischen Abmaße des Transportgutes lassen sich beispielsweise mit Hilfe eines Bildverarbeitungssystems aus den Bildern der Videokameras ermittelt.

Hilfreich kann nach einem anderen Merkmal der Erfindung auch die Erfassung konstruktiver Besonderheiten des Transportgutes sein, z.B. die Art und Anordnung der Handgriffe eines Koffers oder der Transportrollen an einem Trolley.

Schließlich kann als weiteres spezifisch physikalisches Merkmal, auch in Kombination mit einem oder mehreren der vorstehend beanspruchten Merkmale, die Masse des Transportgutes erfasst und in der Datenbank abgelegt werden, wobei die Masse mit bekannten Wiegeeinrichtungen ermittelbar ist.

Aus diesen oder zumindest einigen dieser Merkmale wird der erfindungsgemäße Merkmalsdatensatz gebildet, der zusammen mit dem vorhandenen Identifikationscode des Informationsträgers als Signatur für ein individuelles Transportgut in einer Datenbank abgelegt wird, die aus einer Vielzahl von aus Identifikationscode und Signatur bestehenden Datenpaaren besteht, wobei jedes Datenpaar eines der im Umlauf befindlichen Transportgüter repräsentiert.

Es ist bekannt, für digitale Objekte, zum Beispiel für Online-Artikel von wissenschaftlichen Fachzeitschriften, eindeutige und dauerhafte Identifikatoren zu verwenden, um den Zugriff auf ein identifiziertes Objekt zu ermöglichen oder beim standardisierten Austausch von Informationen die Objekte und Nachrichten eindeutig zu bezeichnen. Derartige Identifikatoren könnten auch bei dem erfindungsgemäßen Verfahren eine schnellere Identifikation unterstützen und eine schnelle Zuordnung ermöglichen. Es wird deshalb nach einem besonderen Merkmal der Erfindung vorgeschlagen, das Transportgut mit einem für das Transportgut eindeutigen Identifier zu versehen, der bestimmte eindeutige Merkmale des Transportgutes repräsentiert und die entsprechenden Daten in digitalisierter Form enthält. Von diesem Identifier kann mindestens ein Teil der erwünschten Informationen über die physikalischen Merkmale des Transportgutes unmittelbar abgegriffen und als elektronischer Merkmalsdatensatz im Rechner abgelegt werden.

Es ist von Vorteil, wenn der Identifier der Erfindung bereits vom Hersteller des Transportgutes, etwa dem Hersteller eines Gepäckstückes an diesem angebracht wird, ähnlich der ISBN Nummer in einem Buch oder einer Zeitschrift. So könnte jedes Gepäckstück (Koffer, Tasche, Trolley) die Informationen über seine physikalischen Eigenschaften bereits beim Kauf in elektronischer Form enthalten und so bereits äußerlich eine Abgrenzung zu anderen Gepäckstücken ermöglichen.

Es ist im Rahmen der Erfindung aber auch möglich, den Identifier nachträglich in Form eines Aufklebers oder Anhängers an dem Transportgut anzubringen. Ein Airline-Kunde beispielsweise mit entsprechendem Identifier an seinem Gepäck würde damit in jedem Fall größere Sicherheit bekommen, dass sein Gepäck pünktlich ankommt und nicht verloren geht.

Die Informationen des Identifiers können erfindungsgemäß als Barcode oder 2D-Code ausgeführt sein, aber auch auf einem RFID Tag abgebildet sein, der alle oder einzelne der vorstehend beschriebenen Merkmale als Merkmalsdatensatz, der s.g. Signatur enthält.

In der Praxis durchläuft das Transportgut die Transportanlage, beispielsweise als Gepäckstück in einer Airport Logistik, und muss dort an verschiedenen Stationen erkannt werden, um die richtigen Aktionen (Weichenstellungen) der Fördertechnik auslösen zu können. Zu diesem Zweck sind an bestimmten Stationen zahlreiche Sensoren angebracht, die zunächst versuchen, den Identifikationscode auf dem Informationsträger zu lesen. Wenn der Identifikationscode zuverlässig gelesen werden kann, können die zu diesem Transportgut notwendigen Aktionen ohne weitere Maßnahmen veranlasst werden.

Sollte der Identifikationscode nicht gelesen werden können, z.B. wegen eines fehlenden, verdeckten, beschädigten oder verschmutzten Informationsträgers, werden mit Hilfe des erfindungsgemäßen Verfahrens mittels entsprechender Sensoren oder über das Auslesen des Identifiers die physikalischen Merkmale dieses Transportgutes bestimmt und zu einem für diese Transportgut typischen Merkmalsdatensatz (Signatur) zusammengefasst. Mit diesem Merkmalsdatensatz wird in der Datenbank, in der alle Merkmalsdatensätze aller Gepäckstücke abgelegt sind, nach Übereinstimmungen gesucht. Der abgespeicherte Merkmalsdatensatz, welcher die größte Ähnlichkeit mit dem abgefragten Merkmalsdatensatz hat, ist dann mit großer Wahrscheinlichkeit derjenige, der zu dem untersuchten Gepäckstück gehört. Der zugehörige Identifikationscode (einschließlich Ziel-Airport und Flugnummer) kann dann aus der Datenbank entnommen und die für dieses Transportgut notwendigen Aktionen können in die Wege geleitet werden.

Durch die beschriebene erfindungsgemäße Lösung kann beispielsweise die Erkennungsrate bei Gepäckstücken im Gepäckfördersystem eines Airports deutlich erhöht und die Fehlerrate erheblich gesenkt werden. Dadurch entfällt bei einem großen Teil der nicht erkannten Gepäckstücke der zusätzliche manuelle Aufwand zur Identifizierung. Darüber hinaus können auch Gepäckstücke, bei denen der Informationsträger verloren gegangen ist, identifiziert und wiedergefunden werden, so dass der Airport von dem Ersatz und der Suche verloren gegangener Gepäckstücke entlastet werden kann. Mit dem beschriebenen System lassen sich also deutlich bessere wirtschaftliche Ergebnisse erzielen. Die vermiedene Verärgerung der Passagiere über fehlgeleitetes und verloren gegangenes Gepäck führt zu einer höheren Kundenzufriedenheit und Akzeptanz.

Ein weiterer mit dem erfindungsgemäßen Verfahren erzielbarer Vorteil besteht darin, dass vor dem Beladen von Flugzeugen überprüft werden kann, ob ein am Gepäckstück angebrachter Informationsträger tatsächlich mit dem erfassten Merkmalsdatensatz übereinstimmt. Dadurch lassen sich besonders gefährdete Airlines oder gefährdete Flüge vor Gepäckmanipulationen innerhalb des Airports zum Zwecke der Fluggefährdung schützen.

Ein Ausführungsbeispiel der Erfindung ist in der Zeichnung dargestellt und wird nachfolgend beschrieben.

Es zeigt:
- Figur 1: das Blockschaltbild eines Flughafen Check-in-Systems gemäß der Erfindung und
- Figur 2: das Blockschaltbild einer Station zur Identifikation der Gepäckstücke.

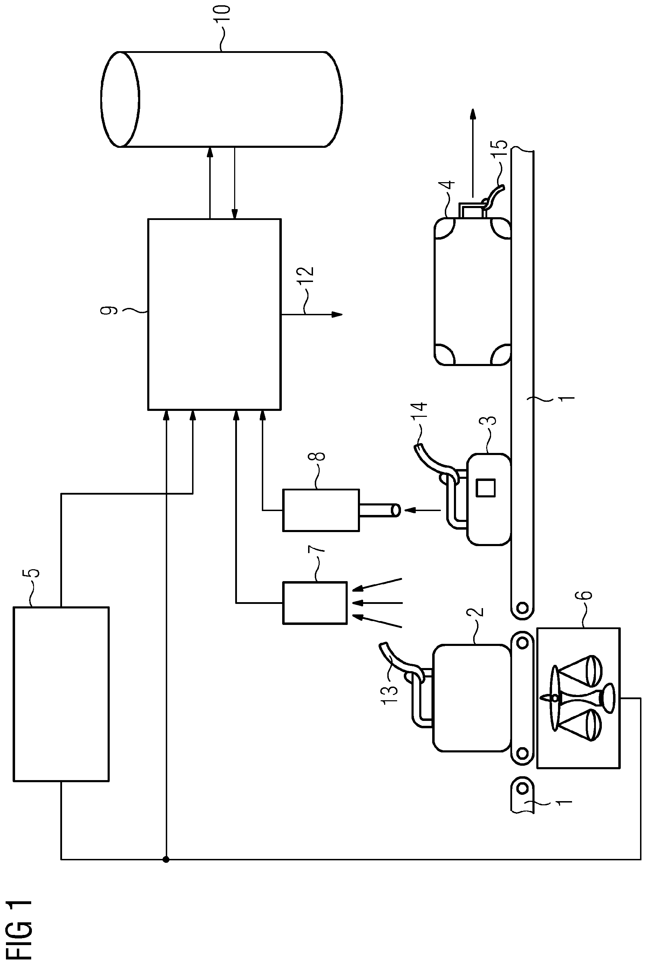

Figur 1 zeigt grob schematisch ein erfindungsgemäßes Checkin-System am Beispiel eines Flughafens. Auf dem Transportband 1 befinden sich die Gepäckstücke 2, 3 und 4. Die Check-in-Station 5 erhält vom Wiegesystem 6 Angaben über das Gewicht des jeweiligen Gepäckstückes 2, 3 oder 4 und generiert den Identifikationscode, der, zusammen mit dem jeweils erfassten Gewicht, an den Steuerrechner 9 gesendet wird. Der 3D-Sensor 7 ermittelt die geometrischen Abmaße eines jeden Gepäckstückes 2, 3 oder 4 und liefert die einzelnen Parameter ebenfalls an den Steuerrechner 9. Weiterhin erzeugt eine oder erzeugen mehrere Kameras 8 Bilder von jedem Gepäckstück 2, 3 oder 4, die auch an den Steuerrechner 9 weitergeleitet werden. Es können auch Kameras eingesetzt werden, die die Textur der Oberfläche des Gepäckstückes erfassen, die später im Steuerrechner 9 ausgewertet wird.

Der Steuerrechner 9 ermittelt schließlich aus den übermittelten Daten eines jeden Gepäckstückes, (aus der Textur) das Material, die geometrische Form und die Formstabilität, konstruktive Besonderheiten, falls vorhanden den Gepäckstück-Identifier, die Farbe des Gepäckstückes 2, 3 oder 4 und die Farbverteilung auf der Gepäckoberfläche sowie die Masse eines jeden Gepäckstückes und fasst all diese Informationen über jedes Gepäckstück zu einem Merkmalsdatensatz zusammen, der zusammen mit dem auf dem Informationsträger 13, 14, 15 aufgedruckten Identifikationscode an die Datenbank 10 gesendet wird.

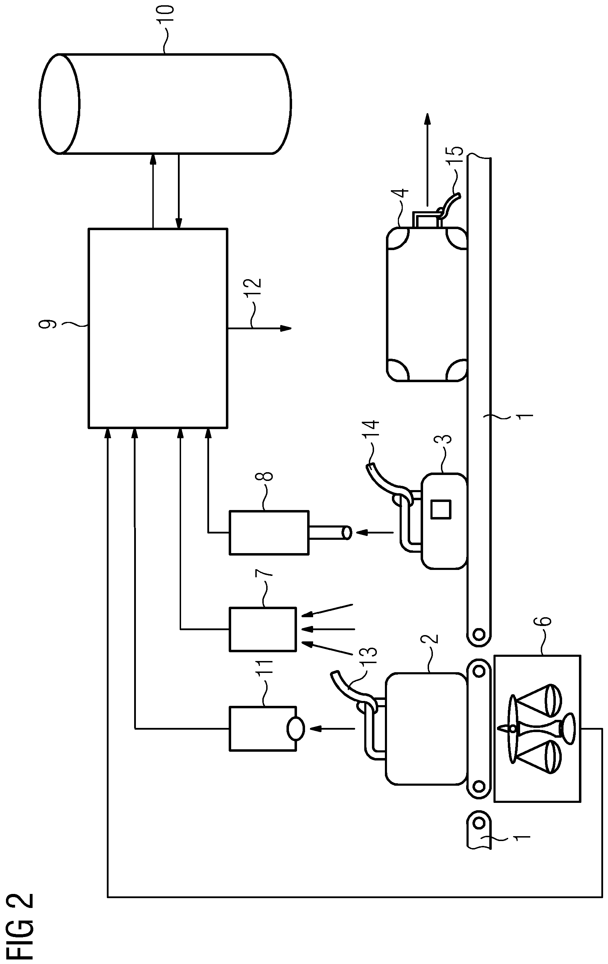

Figur 2 zeigt das Blockschaltbild einer Station, in der herkömmlich nicht identifizierbare Gepäckstücke identifiziert werden können. Zunächst wird mit Hilfe eines oder mehrerer Barcode-Leser 11 versucht, den Identifikationscode eines jeden Gepäckstückes auf den Informationsträgern 13, 14 und 15. zu lesen. Wenn das mit ausreichender Sicherheit gelingt, ist die Identifizierung abgeschlossen. Bei Unsicherheit der Bestimmung des Identifikationscodes oder falls gar kein Code gelesen werden kann, wird mit Hilfe der Waage 6, des 3D-Sensors 7 und der Kamera 8 ein vollständiger Merkmalsdatensatz in der gleichen Weise, wie in Figur 1 gezeigt und dazu beschrieben ist, ermittelt und vom Steuerrechner 9 als Anfrage an die Datenbank 10 gesandt. Die Datenbank 10 vergleicht den gelieferten Merkmalsdatensatz mit den zuvor abgespeicherten Merkmalsdatensätzen und liefert bei Übereinstimmung mit einem dieser Merkmalsdatensätze dessen zugehörigen Identifikationscode zurück. Der Steuerrechner 9 ist dann in der Lage, die erforderlichen Steuersignale 12 an das Transportsystem, beispielsweise zur Weichenverstellung, auszugeben.

## Patentansprüche

1. Verfahren zum Identifizieren und Transportieren in einem Transport- und/oder Sortiersystem von sich physikalisch voneinander unterscheidenden Transportgütern (2, 3, 4), insbesondere von automatisch sortierbarem Passagiergepäck im Flug- , Bahn oder Schiffsreiseverkehr, unter Verwendung eines einem jeweiligen Transportgut (2, 3, 4) zugeordneten und an dem jeweiligen Gepäckstück (2, 3, 4) angebrachten elektronisch auslesbaren Identifikationscodes,
wobei vor dem oder beim Aufgeben des Transportgutes (2, 3, 4) in dem Transport- und/oder Sortiersystem mittels spezieller Sensoren (6, 7, 8) spezifische physikalische Merkmale des jeweiligen Transportgutes ermittelt und als elektronischer Merkmalsdatensatz zusammen mit dem dem jeweiligen Transportgut zugeordneten Identifikationscode in einer Datenbank (10) abgelegt werden
**dadurch gekennzeichnet,**
**dass**, im Fall einer unmöglichen Identifikation eines Transportgutes (2, 3, 4) über den elektronisch gelesenen Identifikationscode, mittels geeigneter Sensoren (6, 7, 8) ein weiterer Merkmalsdatensatz von dem nicht identifizierbaren Transportgut (2, 3, 4) angefertigt und mit den in der Datenbank (10) abgelegten Merkmalsdatensätze verglichen wird, und - dass bei mindestens hinreichender Übereinstimmung dieses weiteren angefertigten Merkmalsdatensatzes mit einem der in der Datenbank (10) zuvor abgelegten Merkmalsdatensätze das Transportgut (2, 3, 4) unter Verwendung des dem zuvor abgelegten Merkmalsdatensatz zugeordneten Identifikationscodes identifiziert und transportiert wird.

2. Verfahren nach Anspruch 1,
**dadurch gekennzeichnet, dass**
als ein spezifisch physikalisches Merkmal die Textur der Oberfläche des jeweiligen Transportgutes (2, 3, 4) sensorisch erfasst wird.

3. Verfahren nach Anspruch 1 oder 2,
**dadurch gekennzeichnet, dass**
die Farbe und/oder Farbverteilung auf der Oberfläche des Transportgutes (2, 3, 4) erfasst und dem Merkmalsdatensatz hinzugefügt werden.

4. Verfahren nach einem oder mehreren der Ansprüche 1 bis 3,
**dadurch gekennzeichnet, dass**
als spezifisches physikalisches Merkmal die Form und/oder Formstabilität des Transportgutes (2, 3, 4) erfasst werden.

5. Verfahren nach einem oder mehreren der Ansprüche 1 bis 4,
**dadurch gekennzeichnet, dass**
konstruktive Besonderheiten des Transportgutes (2, 3, 4) erfasst werden.

6. Verfahren nach einem oder mehreren der vorhergehenden Ansprüche,
**dadurch gekennzeichnet, dass**
als spezifische physikalische Merkmale das Abbild und/oder die geometrischen Abmaße und/oder die Masse des Transportgutes (2, 3, 4) erfasst und in der Datenbank (10) abgelegt werden.

7. Verfahren nach Anspruch 1,
**dadurch gekennzeichnet, dass**
das Transportgut (2, 3, 4) mit einem für physikalische Merkmale des Transportgutes (2, 3, 4) eindeutigen Identifier versehen wird.

8. Verfahren nach Anspruch 7,
**dadurch gekennzeichnet, dass**
der Identifier vom Hersteller des Transportgutes (2, 3, 4), insbesondere eines Gepäckstücks (2, 3, 4), an diesem angebracht ist.

9. Verfahren nach Anspruch 7,
**dadurch gekennzeichnet, dass**
der Identifier in Form eines Aufklebers oder Anhängers (13, 14, 15) an dem Transportgut (2, 3, 4) angebracht wird.

10. Verfahren nach Anspruch 7 bis 9,
**dadurch gekennzeichnet, dass**
der Identifier als Barcode oder 2D-Code ausgeführt ist.

11. Verfahren nach Anspruch 7, 8 oder 9,
**dadurch gekennzeichnet, dass**
der Identifier als RFID Tag ausgebildet ist.

## Claims

1. Method for identifying and transporting transport goods (2, 3, 4), which are physically different from one another, in a transport and/or sorting system, in particular automatically sortable passenger luggage in air, rail or cruise traffic, using an electronically readable identification code assigned to a respective item of transport goods (2, 3, 4) and attached to the respective item of luggage (2, 3, 4),
wherein, before or during the dropping-off of the transport goods (2, 3, 4) in the transport and/or sorting system, specific physical features of the respective transport goods are detected by means of specific sensors (6, 7, 8) and are stored in a database (10) as electronic feature data records together with the identification code assigned to the respective transport goods,
**characterised in that**
in the event of it not being possible to identify an item of transport goods (2, 3, 4) by way of the electronically read identification code, a further feature data record of the unidentifiable transport goods (2, 3, 4) is produced by means of suitable sensors (6, 7, 8) and is compared with the feature data records stored in the database (10), and
- if said further produced feature data record at least sufficiently corresponds with one of the feature data records previously stored in the database (10), the transport goods (2, 3, 4) is identified and transported using the identification code assigned to the previously stored feature data record.

2. Method according to claim 1,
**characterised in that**
the texture of the surface of the respective transport goods (2, 3, 4) is recorded by sensors as a specific physical feature.

3. Method according to claim 1 or 2,
**characterised in that**
the colour and/or colour distribution on the surface of the transport goods (2, 3, 4) are recorded and added to the feature data record.

4. Method according to one or more of claims 1 to 3,
**characterised in that**
the shape and/or shape stability of the transport goods (2, 3, 4) are recorded as specific physical features.

5. Method according to one or more of claims 1 to 4,
**characterised in that**
structural characteristics of the transport goods (2, 3, 4) are recorded.

6. Method according to one or more of the preceding claims,
**characterised in that**
the image and/or the geometric dimensions and/or the mass of the transport goods (2, 3, 4) are recorded and stored in the database (10) as specific physical features.

7. Method according to claim 1,
**characterised in that**
the item of transport goods (2, 3, 4) is provided with a unique identifier for physical features of the transport goods (2, 3, 4).

8. Method according to claim 7,
**characterised in that**
the identifier is attached to the transport goods (2, 3, 4), in particular a luggage item (2, 3, 4), by the manufacturer of said item.

9. Method according to claim 7,
**characterised in that**
the identifier is attached to the transport goods (2, 3, 4) in the form of a sticker or tag (13, 14, 15).

10. Method according to claim 7 to 9,
**characterised in that**
the identifier is designed as a barcode or 2D code.

11. Method according to claim 7, 8 or 9,
**characterised in that**
the identifier is designed as an RFID tag.

## Revendications

1. Procédé destiné à l'identification et au transport dans un système de transport et/ou de tri de produits transportés se différenciant physiquement les uns des autres (2, 3, 4), en particulier de bagages passagers pouvant être triés automatiquement dans le trafic aérien, ferroviaire ou naval, en utilisant un code d'identification lisible de manière électronique associé à un produit transporté respectif (2, 3, 4) et mis en place au niveau du bagage respectif (2, 3, 4), dans lequel avant ou pendant le passage du produit transporté (2, 3, 4) dans le système de transport et/ou de tri des caractéristiques physiques spécifiques du produit transporté respectif sont déterminées au moyen de capteurs spéciaux (6, 7, 8) et enregistrées dans une base de données (10) en tant que jeu de données de caractéristiques électronique conjointement avec le code d'identification associé au produit transporté respectif,
**caractérisé en ce que** dans le cas d'une identification impossible d'un produit transporté (2, 3, 4) par le biais du code d'identification lu de manière électronique, un autre jeu de données de caractéristiques est produit au moyen de capteurs adéquats (6, 7, 8) par le produit transporté non identifiable (2, 3, 4) et comparé avec les jeux de données de caractéristiques enregistrés dans la base de données (10), et **en ce que** lors d'une concordance au moins suffisante de cet autre jeu de données de caractéristiques produit avec l'un des jeux de données de caractéristiques préalablement enregistrés dans la base de données (10) le produit transporté (2, 3, 4) est identifié et transporté en utilisant le code d'identification associé au jeu de données de caractéristiques préalablement enregistré.

2. Procédé selon la revendication 1,
**caractérisé en ce que**
la texture de la surface du produit transporté respectif (2, 3, 4) est détectée de manière sensorielle en tant que caractéristique physique spécifique.

3. Procédé selon la revendication 1 ou 2,
**caractérisé en ce que**
la couleur et/ou la distribution des couleurs sur la surface du produit transporté (2, 3, 4) sont détectées et ajoutées au jeu de données de caractéristiques.

4. Procédé selon l'une ou plusieurs des revendications 1 à
3, **caractérisé en ce que**
la forme et/ou la stabilité de la forme du produit transporté (2, 3, 4) sont détectées en tant que caractéristique physique spécifique.

5. Procédé selon l'une ou plusieurs des revendications 1 à
4, **caractérisé en ce que**
des traits constructifs du produit transporté (2, 3, 4) sont détectés.

6. Procédé selon l'une ou plusieurs des revendications
précédentes, **caractérisé en ce que**
l'image et/ou les dimensions géométriques et/ou la masse du produit transporté (2, 3, 4) sont détectées en tant que caractéristiques physiques spécifiques et enregistrées dans la base de données (10).

7. Procédé selon la revendication 1,
**caractérisé en ce que**
le produit transporté (2, 3, 4) est équipé d'un identifiant explicite pour les caractéristiques physiques du produit transporté (2, 3, 4).

8. Procédé selon la revendication 7,
**caractérisé en ce que**
l'identifiant est mis en place par le fabricant du produit transporté (2, 3, 4), en particulier d'un bagage (2, 3, 4).

9. Procédé selon la revendication 7,
**caractérisé en ce que**
l'identifiant est mis en place au niveau du produit transporté (2, 3, 4) sous la forme d'un autocollant ou d'un élément accroché (13, 14, 15).

10. Procédé selon les revendications 7 à 9,
**caractérisé en ce que**
l'identifiant est réalisé en tant que code à barres ou code 2D.

11. Procédé selon la revendication 7, 8 ou 9,
**caractérisé en ce que**
l'identifiant est réalisé en tant qu'étiquette RFID.
